Europäisches Patentamt

European Patent Office

Office européen des brevets

(19)

(11) Veröffentlichungsnummer: **0 119 474**
**B1**

(12) **EUROPÄISCHE PATENTSCHRIFT**

(45) Veröffentlichungstag der Patentschrift:
**16.09.87**

(51) Int. Cl.⁴: **C 04 B 35/52, C 25 B 11/14**

(21) Anmeldenummer: **84101604.1**

(22) Anmeldetag: **16.02.84**

(54) Verfahren zur Herstellung einer als Anode verwendbaren Elektrode.

(30) Priorität: **19.02.83 DE 3305753**

(43) Veröffentlichungstag der Anmeldung:
**26.09.84 Patentblatt 84/39**

(45) Bekanntmachung des Hinweises auf die Patenterteilung:
**16.09.87 Patentblatt 87/38**

(84) Benannte Vertragsstaaten:
**BE CH FR GB IT LI**

(56) Entgegenhaltungen:
**DE - A - 513 278**
**DE - A - 1 471 136**
**DE - A - 2 036 394**
**DE - A - 2 133 044**
**DE - A - 3 025 860**
**DE - B - 2 343 473**
**GB - A - 915 062**
**GB - A - 2 109 006**

(73) Patentinhaber: **Kernforschungsanlage Jülich**
**Gesellschaft mit beschränkter Haftung, Postfach 1913,**
**D-5170 Jülich 1 (DE)**

(72) Erfinder: **Struck, Bernd Dieter, Dr.,**
**Hülsenbergstrasse 33, D-5163 Langerwehe (DE)**
Erfinder: **Dias, Francisco Joachim, Neuburgerstrasse 15,**
**D-5170 Jülich (DE)**
Erfinder: **Luhleich, Hartmut, Dr., Chlodwigplatz 15,**
**D-5160 Düren (DE)**
Erfinder: **Siebert, Ursula, An den Quellen 34,**
**D-5102 Würselen (DE)**

ACTORUM AG

## Beschreibung

Die Erfindung bezieht sich auf ein Verfahren zur Herstellung einer aus Graphit und/oder einem graphitähnlichen Material bestehenden, insbesondere bei der anodischen Oxidation von Schwefeldioxid als Anode verwendbaren Elektrode. Die Erfindung bezieht sich ferner auf eine besondere Verwendung der Elektrode.

Elektroden der vorgenannten Art sind bekannt. Sie sind einsetzbar beispielsweise bei der anodischen Oxidation von Schwefeldioxid in der Elektrolysezelle zum Schwefelsäure-Hybrid-Kreisprozess, bei der anodischen Oxidation von Schwefeldioxid aus Abgasen sowie allgemein zur Herstellung von Schwefelsäure aus $SO_2$. Die Elektroden sind ferner einsetzbar als Analysator zur Bestimmung von $SO_2$-Konzentrationen.

Zur energiesparenden Durchführung der vorgenannten Prozesse ist es unter anderem wünschenswert, möglichst aktive Elektroden der vorgenannten Art zur Verfügung zu haben. So geht beispielsweise aus K. Wiesener, «Zur anodischen Oxidation von Schwefeldioxid an porösen Kohleelektroden in sauren Elektrolyten», Wiss. Z. Techn. Univers. Dresden 21/1972, 513–518, hervor, dass man versucht hat, Kohleelektroden durch Erhitzen auf 400°C bis 1100°C in einer oxidierenden Atmosphäre (Luft, $H_2O$, $CO_2$) zu aktivieren. Die Kohleelektroden waren vorgesehen zur direkten anodischen Oxidation von $SO_2$ in Schwefelsäure. Gegenüber der Verwendung von nichtbehandelten Kohleelektroden nahm die Stromdichte bei konstantem Potential jedoch nur geringfügig zu.

Aus der DE-PS 2 836 353 ist ferner ein Verfahren zur Aktivierung einer Elektrode bekannt, bei der auf der Oberfläche des Graphitkörpers eine dünne, mittels eines Bindemittels, insbesondere einem Kautschukbinder mit dem Graphitkörper der Elektrode verbundene Schicht aus Aktivkohle aufgebracht ist. Die Anwendung dieser bekannten Elektrode führt zwar zu einer Verbesserung der Leistungsfähigkeit der Elektrolyse. Jedoch kann schon bei ihrer Herstellung nicht ganz verhindert werden, dass durch das Bindemittel ein Teil der aufzubringenden Aktivkohle abgedeckt wird, und somit deren Wirksamkeit für die Aktivierung der Elektrode verlorengeht.

Es ist Aufgabe der Erfindung, ein Verfahren zur Herstellung einer Elektrode der eingangs bezeichneten Art zu schaffen, das zu einer Elektrode führt, die eine – soweit es auf den Einsatz der Elektrode ankommt – möglichst energiesparende Durchführung des vorgesehenen Prozesses erlaubt.

Die der Erfindung zugrundeliegende Aufgabe wird gemäss der Erfindung dadurch gelöst, dass auf den Elektrodenkörper eine Beschichtung aus verkokbarer Substanz, wie Zucker, Phenolformaldehydharze, Peche und dgl. aufgebracht wird, der Elektrodenkörper sodann unter Inertgasatmosphäre zur Verkokung der aufgebrachten Schicht auf eine Temperatur im Bereich von 400 bis 800°C gebracht und anschliessend auf eine Temperatur im Bereich von 1400°C bis 2000°C erhitzt wird.

Wie sich gezeigt hat, führen die erfindungsgemässen Massnahmen zu einer Elektrode, bei deren Einsatz der zur anodischen Oxidation von $SO_2$ erforderliche Energieaufwand verringert wird. Die Elektrode gemäss der Erfindung ist dabei einsetzbar in einer Elektrolysezelle zur anodischen Oxidation von Schwefeldioxid in wässriger Schwefelsäure von maximal 60 Gew.-% bei Partialdrücken des $SO_2$ von mindestens $1 \times 10^{-7}$ bar, insbesondere mit einem Zusatz von Jodwasserstoff im Elektrolyten im Bereich zwischen 0,0001 bis 1 Gew.-% und bei Temperaturen von 20°C bis zum Siedepunkt der Schwefelsäure sowie bei Stromdichten ab 1 µA/cm².

Eine zumindest zweckmässige Ausführungsform des Verfahrens gemäss der Erfindung besteht darin, dass die Beschichtung aus verkokbarem Material auf einen aus Graphitfilz bestehenden Elektrodenkörper aufgebracht wird.

Für den Fall, dass die Elektrode durchströmbar sein soll, also ein homogen verteiltes, nach aussen hin offenes Porensystem aufweisen soll, wird die Beschichtung des verkokbaren Materials auf einen aus einer Mischung aus Graphit und/oder einem graphitähnlichen Material und einem Binder hergestellten porösen, durchströmbaren Elektrodenkörper aufgebracht. Dabei ist es von Vorteil, wenn von einem Elektrodenkörper ausgegangen wird, der nach einem bisher nicht der Öffentlichkeit zugänglich gemachten Verfahren (DE-OS 3 305 530) hergestellt worden ist. Nach diesem nicht bekannten Verfahren wird zunächst zur Herstellung eines porösen, durchströmbaren Formkörpers aus Kohlenstoff, des Elektrodenkörpers, ein aus Kohlenstoffpulver und verkokbarem organischem Binder gebildetes Mischpulver zu einem grünen Vorkörper geformt. Der Vorkörper wird sodann in nach Möglichkeit grobe Körner zerkleinert und aus dem so erhaltenen körnigen Material eine in Abhängigkeit von der vorgesehenen Durchlässigkeit des zu bildenden, durchströmbaren Formkörpers im Bereich zwischen 0,2 bis 10 mm liegende Kornfraktion herausgesiebt. Aus der so erhaltenen Kornfraktion wird ein zweiter Grünkörper geformt, wobei der hierbei angewendete Pressdruck um so geringer ist, je grösser die gewünschte Durchlässigkeit des zu bildenden Formkörpers ist. Im Anschluss daran wird der zweite Grünkörper zur Bildung des porösen, durchströmbaren Elektrodenkörpers im Vakuum oder in Inertgasatmosphäre bei einer Temperatur im Bereich zwischen 600 bis 1000°C verkokt. Der so hergestellte Elektrodenkörper wird anschliessend gemäss der durch die Erfindung gegebenen Lehre unter Inertgasatmosphäre auf eine Temperatur im Bereich von 1400°C bis 2000°C erhitzt.

Als zweckmässig hat sich erwiesen dass bei der Herstellung des Mischpulvers, aus dem der grüne Vorkörper für die Elektrode geformt wird, nach einem aus der DE-PS 2 040 252 bekannten Verfahren vorgegangen wird. Denn dadurch ist gewährleistet, dass schon der Vorkörper eine vergleichsweise hohe Porosität und eine relativ grosse Festigkeit aufweist. Nach diesem bekannten Verfahren wird zur Herstellung des Mischpulvers das aus Pech, Teer, Kunstharz o.dgl. bestehende Bindemittel zunächst in einer Flüssigkeit, in der zuvor das aus gemahlenem Koks, Elektrographit, Naturgraphit, Kohle aus Holz oder anderen Zellstoffen und/oder aus Russ bestehende Kohlenstoffpulver aufgeschlämmt worden war, ganz oder zum Teil gelöst. Die Lösung wird sodann in eine Flüssigkeit, mit der das Lösungsmittel mischbar, in der das Bindemittel jedoch nicht oder nur schwer löslich ist, wie Wasser, eingegeben. Die mit dem Bindemittel überzogenen und sich abgesetzten und dadurch eine schlammige Masse bildenden Kohlenstoffkörner werden durch Dekantieren von der überstehenden Flüssigkeit befreit und anschliessend getrocknet.

Die Herstellung des grünen Vorkörpers aus dem Mischpulver geschieht nach bekannten Verfahren wie Gesenk- oder Strangpressen, Schlikkern oder ähnlichen Verfahren. Dabei ist es jedoch ferner von Vorteil, dass gemäss der aus der DE-PS 2 133 044 bekannten Verfahrensweise der Schlamm zunächst getrocknet, das dabei gebildete Pulver in die für die Formgebung vorgesehene Form gebracht, anschliessend den Dämpfen von Flüssigkeiten, in denen das Bindemittel ganz oder teilweise löslich ist, ausgesetzt und im Anschluss daran getrocknet und in an sich bekannter Weise verkokt wird. Dabei beträgt der Anteil des Bindemittels in dem verwendeten Schlamm zweckmässigerweise mehr als 25 Gew.%.

Auch zur Bildung des zweiten Grünkörpers ist es von Vorteil, die aus der DE-PS 2 133 044 bekannte Verfahrensweise entsprechend anzuwenden. Hierzu wird die als Ausgangsprodukt für den zweiten Grünkörper vorgesehene Kornfraktion in die für die Formgebung vorgesehene Form gebracht, anschliessend den Dämpfen von Flüssigkeiten, in denen das Bindemittel ganz oder teilweise löslich ist, ausgesetzt und im Anschluss daran getrocknet.

Die Zerkleinerung des grünen Vorkörpers erfolgt zweckmässigerweise mittels eines Backenbrechers, der so eingestellt wird, dass eine Hauptkornfraktion entsprechend der gewünschten Durchlässigkeit des Endkörpers entsteht. Je grösser der Gas- bzw. Flüssigkeitsdurchsatz des Endkörpers sein soll, um so grösser wird die Korngrösse gewählt, was insbesondere durch entsprechende Auswahl der Siebfraktion geschieht. Aus einem solchen, aus relativ einheitlicher Körnung bestehenden Pulver wird zweckmässigerweise mittels Gesenkpressen erneut ein Grünkörper hergestellt, wobei bei gleicher Körnung die Durchlässigkeit des Endkörpers um so grösser ist, je geringer der Pressdruck ist.

Bei dieser Verfahrensstufe wirkt sich die Anwendung der aus den DE-PS 2 040 252 und 2 132 492 bekannten Verfahren zur Herstellung des Mischpulvers auch insofern günstig aus, als infolge des gleichmässigen Überzugs der Pulverkörner mit der Binderhaut die bei der Herstellung des zweiten Grünkörpers benötigten Pressdrucke sehr niedrig sein können, und trotzdem Körper gebildet werden, deren Festigkeit vergleichsweise hoch ist.

Der nach Zerkleinern des Vorkörpers und aus der dabei gewonnenen Kornfraktion gebildete zweite Formkörper, der Elektrodenkörper, besteht aus einem Granulat von Körnern und weist ebenso wie der verkokte Endkörper relativ grosse Poren auf.

Wie sich gezeigt hat, besteht eine besonders vorteilhafte Verwendung der Elektrode gemäss der Erfindung im Einsatz in einer Elektrolysezelle zur anodischen Oxidation von Schwefeldioxid in Gegenwart von Jodwasserstoff in einer 30 Gew.%igen bis 58 Gew.%igen Schwefelsäure mit einem Zusatz von 0,005 Gew.% bis 1 Gew.% Jodwasserstoff, bei einem Partialdruck des $SO_2$ von mindestens 0,1 bar, und einer Temperatur im Bereich zwischen 80 und 120°C und bei einer Stromdichte von mindestens 100 mA/cm².

Ausführungsbeispiel 1

Eine Scheibe (Fläche 10 cm², Höhe 10 mm) aus Graphitfilz des Typs GFA 10 der Firma Sigri (offenes Volumen etwa 95 Vol%) wurde in eine ethanolische Lösung eines Phenolformaldehydharzes (30 Gew.-%) getaucht und das Ethanol nach dem Herausnehmen aus dem Filz verdampft. Die Verkokung des Phenolformaldehydharzes an dem derart präparierten Graphitfilz erfolgte bei 650°C unter Inertgas. Das fertig behandelte Graphitfilz wurde in eine Graphitringfassung eingesetzt. Mit dieser als Durchflusselektrode eingesetzten Elektrode wurden Messungen der anodischen Oxidation von $SO_2$ in Gegenwart von HJ unter folgenden Bedingungen durchgeführt:

Der Anolyt bestand aus 50 Gew.% $H_2SO_4$ mit 0,15 Gew.% HJ sowie $SO_2$ bei 1 bar und $SO_2$-gesättigtem Elektrolyten.

Die Temperatur betrug 88°C.

Die Elektrode war in der Elektrolysezelle bis auf 5 cm² abgedeckt.

Die Durchflussgeschwindigkeit des Anolyten betrug 700 cm³/min.

Als Methode der Messung der elektrochemischen Strom-Spannungskurven unter quasi-stationären Bedingungen (3 mV/s) diente die zyklische Voltametrie. Die Vergleichselektrode war eine dynamische Wasserstoffelektrode in 50 Gew.-% $H_2SO_4$ bei 88°C und 1 bar.

Die Messungen ergaben bei

| einer Stromdichte von | ein Potential von |
|---|---|
| 200 mA/cm² | 540 mV |
| 300 mA/cm² | 605 mV |
| 400 mA/cm² | 660 mV |

Nach der Messung wurde die Elektrode gereinigt, getrocknet und bis 1500°C unter Vakuum aufgeheizt.

Die nachfolgenden Messungen ergaben bei

| einer Stromdichte von | ein Potential von |
|---|---|
| 200 mA/cm² | 520 mV |

300 mA/cm²         580 mV
400 mA/cm²         635 mV

Ausführungsbeispiel 2

Nach dem aus der DE-PS 2 040 252 bekannten Verfahren wurde ein Mischpulver aus Elektrographitpulver und 30 Gew.-% eines Phenolformaldehydharzes hergestellt und hieraus ein grüner Vorkörper durch Verpressen geformt. Der Vorkörper wurde anschliessend grob gebrochen und in einem Backenbecher zerkleinert. Eine Kornfraktion von 0,5 mm bis 0,9 mm wurde herausgesiebt und mit einem Druck von 250 mbar ein Grünkörper von 35 mm ∅ und 10 mm Höhe geformt. Dieser Grünkörper wurde anschliessend durch Aufheizen in Intertgasatmosphäre bei 800°C verkokt.

Mit dieser so hergestellten porösen, durchströmbaren Elektrode wurden elektrochemische Messungen unter den im Ausführungsbeispiel 1 angegebenen Bedingungen durchgeführt.

Die Messungen ergaben bei

| einer Stromdichte von | ein Potential von |
| --- | --- |
| 200 mA/cm² | 530 mV |
| 300 mA/cm² | 600 mV |
| 400 mA/cm² | 670 mV |

Die Elektrode wurde danach gereinigt, getrocknet und bei einer Temperatur von etwa 2000°C im Vakuum geglüht.

Die Messungen ergaben bei

| einer Stromdichte von | ein Potential von |
| --- | --- |
| 200 mA/cm² | 510 mV |
| 300 mA/cm² | 560 mV |
| 400 mA/cm² | 610 mV |

Patentansprüche

1. Verfahren zur Herstellung einer aus Graphit und/oder einem graphitähnlichen Material bestehenden, insbesondere bei der anodischen Oxidation von Schwefeldioxid als Anode verwendbaren Elektrode, dadurch gekennzeichnet, dass auf den Elektrodenkörper eine Beschichtung aus verkokbarer Substanz, wie Zucker, Phenolformaldehydharze, Peche und dgl. aufgebracht wird, der Elektrodenkörper sodann unter Inertgasatmosphäre zur Verkokung der aufgebrachten Schicht auf eine Temperatur im Bereich von 400 bis 800°C gebracht und anschliessend auf eine Temperatur im Bereich von 1400 bis 2000°C erhitzt wird.

2. Verfahren nach Anspruch 1, dadurch gekennzeichnet, dass die Beschichtung aus verkokbarem Material auf einen aus Graphitfilz bestehenden Elektrodenkörper aufgebracht wird.

3. Verfahren nach Anspruch 1, dadurch gekennzeichnet, dass für den Fall, dass der Elektrodenkörper bereits aufgrund seines Herstellungsverfahrens eine Beschichtung aus verkokbarer Substanz aufweist, nur die Temperaturbehandlung im Bereich von 1400°C bis 2000°C vorgenommen wird.

4. Verfahren nach Anspruch 3, dadurch gekennzeichnet, dass ein aus Kohlenstoffpulver und verkokbarem organischem Binder gebildetes Mischpulver zu einem grünen Vorkörper geformt wird, worauf der Vorkörper in nach Möglichkeit grobe Körner zerkleinert und aus dem so erhaltenen körnigen Material eine in Abhängigkeit von der vorgesehenen Durchlässigkeit des zu bildenden, durchströmbaren Elektrodenkörpers im Bereich zwischen 0,2 bis 10 mm liegende Kornfraktion herausgesiebt wird, wonach aus der Kornfraktion ein zweiter Grünkörper geformt wird, wobei der hierbei angewendete Pressdruck um so geringer ist, je grösser die gewünschte Durchlässigkeit des zu bildenden Elektrodenkörpers ist, worauf der zweite Grünkörper zur Bildung des porösen durchströmbaren Elektrodenkörpers im Vakuum oder in Inertgasatmosphäre zunächst bei einer Temperatur im Bereich zwischen 600°C bis 1000°C verkokt und anschliessend auf eine Temperatur im Bereich von 1400°C bis 2000°C erhitzt wird.

5. Verfahren nach Anspruch 4, dadurch gekennzeichnet, dass zur Herstellung des Mischpulvers das aus Pech, Teer, Kunstharz o.dgl. bestehende Bindemittel zunächst in einer Flüssigkeit, in der zuvor das aus gemahlenem Koks, Elektrographit, Naturgraphit, Kohle aus Holz oder anderen Zellstoffen und/oder aus Russ bestehende Kohlenstoffpulver aufgeschlämmt worden war, ganz oder zum Teil gelöst und die Lösung sodann in eine Flüssigkeit, mit der das Lösungsmittel mischbar, in der das Bindemittel jedoch nicht oder nur schwer löslich ist, wie Wasser, eingegeben wird, worauf die mit dem Bindemittel überzogenen und sich absetzenden und dadurch eine schlammige Masse bildenden Kohlenstoffkörner durch Dekantieren von der überstehenden Flüssigkeit befreit und anschliessend getrocknet werden.

6. Verfahren nach Anspruch 5, dadurch gekennzeichnet, dass die Aufschlämmung in einer Mischkammer mittels einer Mischdüse in die Trägerflüssigkeit so eingespritzt wird, dass die Kohlenstoffkörner mit dem Bindemittel gleichmässig überzogen werden.

7. Verfahren nach Anspruch 5 oder 6, dadurch gekennzeichnet, dass zur Bildung des grünen Vorkörpers der Schlamm zunächst getrocknet, das dabei gebildete Pulver in die für die Formgebung vorgesehene Form gebracht, anschliessend den Dämpfen von Flüssigkeiten, in denen das Bindemittel ganz oder teilweise löslich ist, ausgesetzt und im Anschluss daran getrocknet wird.

8. Verfahren nach einem der Ansprüche 5 bis 7, dadurch gekennzeichnet, dass der Anteil des Bindemittels in dem verwendeten Schlamm mehr als 25 Gew.% beträgt.

9. Verfahren nach einem der Ansprüche 4 bis 8, dadurch gekennzeichnet, dass zur Bildung des zweiten Grünkörpers die Kornfraktion in die für die Formgebung vorgesehene Form gebracht, anschliessend den Dämpfen von Flüssigkeiten, in denen das Bindemittel ganz oder teilweise löslich ist, ausgesetzt und im Anschluss daran getrocknet wird.

10. Verfahren nach einem der Ansprüche 1 bis 9, dadurch gekennzeichnet, dass vor Aufnahme des Normalbetriebs der Elektrolysezelle die als Anode eingesetzte Elektrode durch Anlegen eines Potentials im Potentialbereich der Hydroxid- und/oder Oxidbildung auf der Elektrode elektrochemisch oxidiert wird.

11. Verfahren nach Anspruch 10, dadurch gekennzeichnet, dass das angelegte Potential mindestens 250 mV gegen die reversible Wasserstoffelektrode in gleicher Lösung beträgt.

12. Verfahren nach Anspruch 10 oder 11, dadurch gekennzeichnet, dass das Potential im Potentialbereich der Hydroxid- und/oder Oxidbildung nicht länger als etwa 10 Sekunden angelegt wird.

13. Verwendung der nach dem Verfahren gemäss einem der Ansprüche 1 bis 12 hergestellten Elektrode in einer Elektrolysezelle zur anodischen Oxidation von Schwefeldioxid in Gegenwart von Jodwasserstoff in einer 30 Gew.%igen bis 58 Gew.%igen Schwefelsäure mit einem Zusatz von 0,005 Gew.% bis 1 Gew.% Jodwasserstoff, bei einem Partialdruck des $SO_2$ von mindestens 0,1 bar, und einer Temperatur im Bereich zwischen 80 und 120°C und bei einer Stromdichte von mindestens 100 mA/cm².

**Claims**

1. Method of producing an electrode which consists of graphite and/or a graphite-like material and which can be used as an anode especially in the anodic oxidation of sulphur dioxide, characterised in that a coating of a substance capable of being coked, such as sugar, phenol formaldehyde resins, pitches and the like, is applied to the electrode body, the electrode body is then brought to a temperature in the region of 400 to 800°C under an inert gas atmosphere for coking the applied coating, and then is heated to a temperature in the region of 1,400 to 2,000°C.

2. Method according to claim 1, characterised in that the coating of material capable of being coked is applied to an electrode body consisting of graphite felt.

3. Method according to claim 1, characterised in that in the event that the electrode body already has a coating of cokable substance by reason of its production process, only the temperature treatment in the region of 1,400°C to 2,000°C is carried out.

4. Method according to claim 3, characterised in that a mixed powder formed of carbon powder and cokable organic binder is shaped to constitute a green preliminary body, whereupon the preliminary body is comminuted into as coarse grains as possible, and from the granular material thus obtained there is screened-out a grain fraction in the range between 0.2 and 10 mm in accordance with the proposed perviousness of the throughflowable electrode body to be formed, whereupon a second green body is moulded from the grain fraction, the press pressure used herein being lower is proportion as the perviousness desired for the electrode body being produced is greater, whereupon the second green body, for the production of the porous throughflowable electrode body, is first of all coked at a temperature in the range between 600°C and 1,000°C in a vacuum or in an inert gas atmosphere and is then heated to a temperature in the region of 1,400°C to 2,000°C.

5. Method according to claim 4, characterised in that for the production of the mixed powder the binder consisting of pitch, tar, synthetic resin or the like is first of all wholly or partly dissolved in a liquid in which previously there had been put into suspension the carbon powder consisting of ground coke, electrographite, natural graphite, charcoal or other celluloses and/or carbonblack, and the solution is then introduced into a liquid with which the solvent is miscible but in which the binder is not soluble or is soluble only with difficulty, such as water, whereupon the binder-coated carbon grains, settling and consequently forming a sludgy mass, are freed of supernatant liquid by decantation, and then dried.

6. Method according to claim 5, characterised in that the suspension is so sprayed by means of a mixing nozzle into the carrier liquid in a mixing chamber that the carbon grains are uniformly coated with the binder.

7. Method according to claim 5 or 6, characterised in that for producing the green preliminary body the sludge is first dried, the powder thus formed is brought to the shape intended for moulding, then subjected to the vapours of liquids wherein the binder is wholly or partly soluble, and then dried.

8. Method according to one of claims 5 to 7, characterised in that the proportion of binder in the sludge used amounts to more than 25 % by weight.

9. Method according to one of claims 4 to 8, characterised in that to produce the second green body the grain fraction is brought to the form intended for moulding, then subjected to the vapours of liquids wherein the binder is wholly or partly soluble, and then dried.

10. Method according to one of claims 1 to 9, characterised in that before undertaking normal operation of the electrolysis cell the electrode used as anode is subjected to electrochemical oxidation by application of a potential in the potential range of hydroxide and/or oxide formation on the electrode.

11. Method according to claim 10, characterised in that the applied potential amounts to at least 250 mV against a reversible hydrogen electrode in the same solution.

12. Method according to claim 10 or 11, characterised in that the potential in the potential range of hydroxide and/or oxide formation is applied for not longer than about 10 seconds.

13. Use of the electrode produced in accordance with one of claims 1 to 12 in an electrolysis cell for the anodic oxidation of sulphur dioxide in the presence of hydrogen iodide in a 30 % by weight to 58 % by weight sulphuric acid with an addition of 0.005% by weight to 1 % by weight of hydrogen iodide, under a partial pressure of $SO_2$ of at least 0.1 bar, and a temperature in the range between 80 and 120°C and with a current density of at least 100 mA/cm².

## Revendications

1. Procédé de fabrication d'une électrode en graphite et/ou en un matériau analogue au graphite, utilisable comme anode, notamment pour l'oxydation anodique du dioxyde de soufre, caractérisé en ce qu'il consiste à déposer sur le corps de l'électrode un revêtement en une substance cokéfiable, comme du sucre, des résines phénolformaldéhyde, de la poix et des substances analogues, à porter immédiatement le corps de l'électrode dans une atmosphère de gaz inerte à une température de 400 à 800°C, pour cokéfier la couche déposée et, ensuite, à le porter à une température de 1400 à 2000°C.

2. Procédé suivant la revendication 1, caractérisé en ce qu'il consiste à déposer le revêtement en matériau cokéfiable sur un corps d'électrode en feutre de graphite.

3. Procédé suivant la revendication 1, caractérisé en ce qu'il consiste à n'effectuer, dans le cas où le corps d'électrode comporte déjà en raison de son procédé de fabrication un revêtement en substance cokéfiable, que le traitement thermique de 1400°C à 2000°C.

4. Procédé suivant la revendication 3, caractérisé en ce qu'il consiste à conformer une poudre formée de poudre de carbone et d'un liant organique cokéfiable en une ébauche à vert, à fragmenter l'ébauche, autant que possible en grains grossiers, et à séparer par tamisage du matériau en grains ainsi obtenu une fraction granulométrique comprise entre 0,2 et 10 mm, en fonction de la perméabilité prévue pour le corps d'électrode perméable à former, puis à former, à partir de la fraction granulométrique, un second corps à vert, la pression de compression utilisée à cet effet étant d'autant plus petite que la perméabilité souhaitée du corps d'électrode à former est plus grande, puis à cokéfier le second corps à vert sous vide ou dans une atmosphère de gaz inerte, d'abord à une température comprise entre 600°C et 1000°C, pour former le corps d'électrode perméable et poreux, et ensuite à le porter à une température comprise entre 1400°C et 2000°C.

5. Procédé suivant la revendication 4, caractérisé en ce qu'il consiste, pour préparer la poudre mixte, à dissoudre en tout ou en partie le liant constitué de poix, de goudron, de résine de matière plastique ou d'une substance analogue, d'abord dans un liquide dans lequel on a mis au préalable en suspension une poudre de carbone constituée de coke broyé, d'électrographite, de graphite naturel, de charbon de bois ou d'autres substances cellulosiques et/ou de suie, et à verser immédiatement la solution dans un liquide qui est miscible au solvant, mais dans lequel le liant n'est pas soluble ou n'est que peu soluble, comme de l'eau, puis à débarrasser par décantation du liquide surnageant les grains de carbone enrobés du liant et se déposant en formant une masse boueuse et, ensuite, à les sécher.

6. Procédé suivant la revendication 5, caractérisé en ce qu'il consiste à projeter la suspension dans le liquide porteur en opérant dans une chambre de mélange au moyen d'une buse de mélange, de façon à enrober les grains de carbone du liant, d'une manière uniforme.

7. Procédé suivant la revendication 5 ou 6, caractérisé en ce qu'il consiste, pour former l'ébauche à vert, à sécher d'abord la boue, à mettre la poudre ainsi formée à la forme prévue pour le façonnage, à la soumettre ensuite aux vapeurs de liquides dans lesquels le liant est entièrement ou partiellement soluble, et ensuite à la sécher.

8. Procédé suivant l'une des revendications 5 à 7, caractérisé en ce que la proportion du liant dans la boue utilisée représente plus de 25 % en poids.

9. Procédé suivant l'une des revendications 4 à 8, caractérisé en ce qu'il consiste, pour former le second corps à vert, à mettre la fraction granulométrique sous la forme prévue pour le façonnage, à la soumettre ensuite aux vapeurs de liquides dans lesquels le liant est partiellement ou entièrement soluble, et ensuite à la sécher.

10. Procédé suivant l'une des revendications 1 à 9, caractérisé en ce qu'il consiste à oxyder électrochimiquement, avant la mise en fonctionnement normal de la cellule d'électrolyse, l'électrode utilisée comme anode, par application à l'électrode d'un potentiel dans la plage de potentiels de la formation de l'hydroxyde et/ou de l'oxyde.

11. Procédé suivant la revendication 10, caractérisé en ce que le potentiel appliqué est d'au moins 250 mV par rapport à l'électrode réversible à l'hydrogène dans la même solution.

12. Procédé suivant la revendication 10 ou 11, caractérisé en ce qu'il consiste à appliquer le potentiel dans la plage de potentiels de la formation de l'hydroxyde et/ou de l'oxyde, pas plus de 10 secondes environ.

13. Utilisation de l'électrode fabriquée par le procédé suivant l'une des revendications 1 à 12, dans une cellule d'électrolyse pour l'oxydation anodique de dioxyde de soufre, en présence d'acide iodhydrique dans de l'acide sulfurique en une concentration de 30 % à 58 % en poids, et avec une addition de 0,005 % en poids à 1 % en poids d'acide iodhydrique, sous une pression partielle du $SO_2$ d'au moins 0,1 bar, et à une température comprise entre 80 et 120°C et sous une densité de courant d'au moins 100 mA/cm².